Europäisches Patentamt

European Patent Office

Office européen des brevets

(19)

(11) Numéro de publication: **0 028 997**
**B1**

(12) **FASCICULE DE BREVET EUROPEEN**

(45) Date de publication du fascicule du brevet: **06.03.85**

(21) Numéro de dépôt: **80430023.4**

(22) Date de dépôt: **12.11.80**

(51) Int. Cl.⁴: **A 01 G 3/03** // B26B15/00

(54) Sécateur hydraulique à asservissement en position.

(30) Priorité: **13.11.79 FR 7928269**

(43) Date de publication de la demande:
**20.05.81 Bulletin 81/20**

(45) Mention de la délivrance du brevet:
**06.03.85 Bulletin 85/10**

(84) Etats contractants désignés:
**AT BE CH DE GB IT LI NL SE**

(56) Documents cités:
**FR-A-2 188 936**

(73) Titulaire: **ETABLISSEMENTS PELLENC ET MOTTE (Société à responsabilité limitée) Quartier Notre-Dame Route de Villelaure F-84120 Pertuis (FR)**

(72) Inventeur: **Pellenc, Roger Joseph Pierre Quartier de la Piscine F-84120 Pertuis (FR)**

(74) Mandataire: **Marek, Pierre 28 & 32 rue de la Loge F-13002 Marseille (FR)**

Courier Press, Leamington Spa, England.

EP 0 028 997 B1

## Description

La présente invention concerne un sécateur hydraulique à asservissement en position, notamment pour travaux de taille ou de récolte, en arboriculture, viticulture et horticulture.

On connait (FR—A—2 367 422) des sécateurs hydrauliques comportant une lame ou crochet fixe rigidement solidaire de la partie antérieure d'un corps servant de poignée, une lame pivotante articulée sur ledit crochet et reliée, au moyen d'une biellette, à la tige d'un piston d'entraînement coulissant de manière étanche dans un alésage dudit corps, et un distributeur hydraulique généralement actionné par un levier ou gâchette et commandant les mouvements dudit piston assurant la fermeture et l'ouverture des lames.

Suivant les réalisations connues de sécateurs hydrauliques de ce genre, il n'est pas possible de synchroniser la vitesse et l'amplitude des mouvements de pivotement de la lame mobile avec la vitesse et l'amplitude des mouvements de la gâchette, de sorte que l'actionnement ou le relâchement de cette dernière provoque irrémédiablement la fermeture ou l'ouverture complète plus ou moins brusque des lames, suivant la puissance de l'outil.

Cela constitue une source de danger, car il est pratiquement impossible d'arrêter le rabattement de la lame mobile en direction de la lame fixe lorsque le distributeur hydraulique a été actionné, et également une insuffisance notable compte tenu du fait qu'il est souvent souhaitable de réduire l'écartement des lames pour pénétrer dans une végétation relativement dense, afin de limiter les possibilités d'accrochage.

Un but de la présente invention est de remédier à ces inconvénients. Son objet permet, en effet, de faire concorder la vitesse et l'amplitude des pivotements de la lame avec la vitesse et l'amplitude des mouvements de la gâchette et, par conséquent, d'immobiliser ladite lame dans une position intermédiaire quelconque entre l'ouverture maximum et la fermeture et vice-versa.

Le sécateur hydraulique selon l'invention est notamment remarquable par le fait qu'il comprend:—un piston dont la tige est reliée à la lame mobile et comportant deux faces opposées de surfaces inégales et délimitant deux chambres, soit une première chambre délimitée par la face de plus petite surface et se trouvant en relation constante avec l'arrivée du fluide hydraulique sous pression et une deuxième chambre délimitée par la face de plus grande surface et susceptible d'être mise en communication avec le retour ou avec ladite première chambre;—un distributeur hydraulique comprenant un tiroir distributeur logé avec une aptitude de coulissement axial dans l'ensemble: piston-tige de piston et relié à un organe de commande manuel;—des moyens de distribution permettant, suivant les positions dudit tiroir, soit de mettre la deuxième chambre en relation avec le retour de fluide hydraulique, de manière à permettre l'avance du piston; soit de fermer cette chambre, de façon à assurer l'immobilisation dudit piston dans une position intermédiaire, soit de mettre en communication ladite chambre et la chambre en relation constante avec l'arrivée, de façon à entraîner le recul de ce dernier en sens contraire.

Un avantage obtenu grâce à l'invention est que le sécateur bénéficie d'une progressivité totale permettant de commander et de moduler directement avec la gâchette, la vitesse de fermeture des lames qu'il est possible de maintenir ouvertes dans des positions intermédiaires entre leur ouverture maximum et leur fermeture. On obtient ainsi un appareil bénéficiant de la puissance des matériels hydrauliques et agissant à la manière des sécateurs à main traditionnels.

Ces buts, avantages et caractéristiques, et d'autres encore, ressortiront mieux de la description qui suit et des dessins annexés dans lesquels:

La figure 1 est une vue en coupe axiale du sécateur hydraulique selon l'invention, dans la position de fermeture des lames.

La figure 2 est une vue en coupe axiale comparable à la figure 1 et montrant le sécateur dans la position d'ouverture des lames.

La figure 3 est une vue de détail du moyen de réglage de l'axe d'articulation de la biellette de manoeuvre reliée à la gâchette, sur l'extrémité postérieure de la tige d'entraînement du tiroir de distribution.

La figure 4 est une vue partielle, à plus grande échelle, de la figure 1.

La figure 5 est une vue partielle, à plus grande échelle, de la figure 2.

La figure 6 est une vue partielle, en coupe axiale, d'une variante d'exécution du dispositif d'actionnement de la lame mobile.

La figure 7 est une vue partielle comparable à la figure 6, illustrant le dispositif hydraulique d'actionnement des lames, dans une position correspondant à l'immobilisation de la lame mobile dans une situation intermédiaire entre l'ouverture maximum et la fermeture.

La figure 8 est une coupe transversale suivant la ligne 8—8 de la figure 7.

On se réfère auxdits dessins pour décrire des exemples de réalisation intéressants, quoique nullement limitatifs, du sécateur hydraulique à asservissement en position suivant l'invention.

Ce sécateur comprend un corps évidé 1 servant de poignée et sur la partie antérieure ou tête duquel est fixé, de toute manière connue, le crochet ou lame fixé 2 de l'appareil. Sur ledit crochet, est articulée, au moyen d'un axe 3, la lame mobile 4 comportant un prolongement ou levier 4a articulé à l'une des extrémités d'un couple de biellettes 5 dont l'autre extrémité est articulée dans une chape 6. Cette chape est rigidement fixée, par exemple par vissage, sur l'extrémité avant de la tige 7 d'un piston d'entraînement 8 avantageusement formé d'une seule pièce avec cette dernière et logé avec une aptitude de coulissement étanche, dans l'évidement du corps 1 et, plus précisément, dans un alésage la formé dans la demi-partie avant de ce dernier.

Ce piston comporte deux faces de travail opposées ayant, de manière préférée, des surfaces inégales, soit une grande face avant f1 et une petite face arrière f2.

Le piston principal 8 est rigidement solidaire, au moyen d'une tige-entretoise alésée 9 disposée à l'opposé de la tige d'entraînement 7, d'un piston secondaire 10 muni d'au moins un joint périphérique et logé, avec une aptitude de coulissement étanche, dans un alésage 1b formé dans la demi-partie postérieure de l'évidement du corps, dans le prolongement de l'alésage 1a et ayant un diamètre inférieur à ce dernier. L'ensemble 7—8—9—10 est avantageusement constitué d'une seule pièce.

La face f3 du piston secondaire 10 disposée en regard de la face f2 du piston principal 8 a une surface plus réduite que celle de cette dernière.

Les pistons 8 et 10 délimitent une chambre annulaire A entourant la tige-entretoise 9.

La tige 7 du piston 8 coulisse, de manière étanche, dans un guide 11 constitué par au moins une bague fixée, de préférence de manière démontable, par exemple au moyen d'un jonc métallique, dans la partie avant de l'évidement du corps 1. Ce guide est pourvu d'au moins un joint périphérique d'étanchéité.

La face interne du guide 11 et la face avant f1 du piston 8 délimitent une chambre annulaire B entourant la tige 7.

Un tiroir distributeur 12 est monté, avec une aptitude de coulissement axial dans l'ensemble tige 7—piston 8 et tige-entretoise 9.

L'extrémité postérieure de ce tiroir est soumise à l'action d'un ressort de compression 13. Ce dernier est, par exemple, calé, d'une part contre un premier anneau 14 installé sur la périphérie de l'extrémité arrière dudit tiroir et, d'autre part, contre un second anneau 15 monté au voisinage de l'extrémité postérieure de l'alésage de l'ensemble tige-entretoise 9—piston secondaire 10.

Le ressort 13 tend donc à repousser, en permanence, le tiroir 12 vers l'avant par rapport à l'ensemble 7—8—9—10.

L'extrémité antérieure du tiroir 12 est reliée à l'extrémité repliée 16a d'une tige de manoeuvre 16 logée avec une latitude de coulissement dans un perçage longitudinal 1c ménagé dans le corps 1, au-dessous de l'alésage 1a.

L'extrémité postérieure de la tige est filetée et comporte une fente 16b.

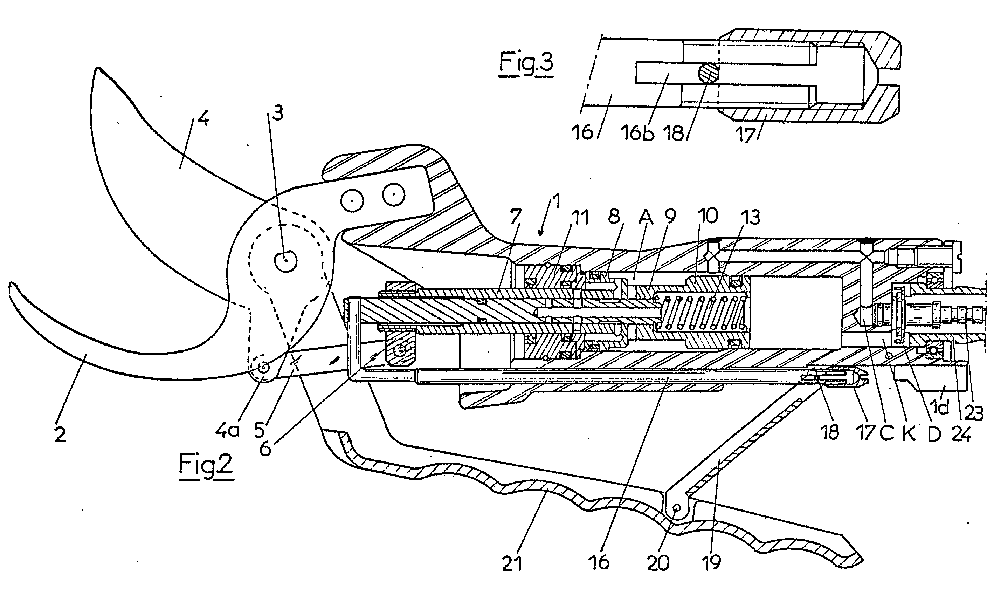

Sur ladite extrémité filetée est vissé un écrou 17 de section quadrangulaire et doté d'une tête de manoeuvre (figure 3).

Cet écrou est immobilisé en rotation par deux appendices 1d que présente la partie

arrière du corps 1, dans le prolongement du perçage 1c, et entre lesquels il peut coulisser axialement.

Cet écrou permet de régler la position, par rapport à la tige 16, de l'axe d'articulation 18 traversant la fente 16b, de l'une des extrémités d'une biellette de manoeuvre 19 également articulée, par son extrémité opposée, au moyen d'un axe 20, sur la partie arrière d'un levier de commande ou gâchette 21.

Cette dernière est également articulée, par son extrémité avant, sur l'axe 3.

L'articulation de la gâchette 21 sur l'axe 3 de la lame mobile et son orientation de l'avant vers l'arrière procure une meilleure prise en main pour les utilisateurs, compte tenu de l'habitude d'utilisation des sécateurs mécaniques traditionnels.

D'autre part, avec un tel agencement, les branches et rameaux n'ont pas tendance, en cours de travail, à se loger entre la gâchette et le corps du sécateur en gênant ou empêchant la coupe.

Un anneau de sécurité 22 articulé sur la partie arrière du corps 1, permet de maintenir la gâchette 21 en position de fermeture en dehors des périodes d'utilisation du sécateur.

Dans la partie postérieure du corps 1, est aménagé un logement pour le branchement démontable du sécateur au dispositif d'accouplement des flexibles coaxiaux d'alimentation 23 et de retour 24 dont l'un amène le fluide hydraulique sous pression provenant d'une source de fluide hydraulique sous pression (pompe, circuit hydraulique d'un tracteur, d'une plateforme automotrice ou autres véhicules, groupe hydraulique adaptable sur motoculteur, etc...), tandis que l'autre assure le retour dudit fluide jusqu'à ladite souce; un tel dispositif d'accouplement étant avantageusement du type décrit dans la Demande de Brevet européen N° 79430005.3 (publiée sous la numero 0004249).

Le logement aménagé à la partie postérieure du corps pour la jonction dudit dispositif d'accouplement comprend deux chambres cylindriques coaxiales, soit une première chambre C de diamètre réduit destinée à l'insertion étanche du raccord intérieur solidaire de l'extrémité du flexible interne 23, et une chambre D, de diamètre plus important, disposée à la suite de la précédente et permettant l'engagement étanche du raccord extérieur assujetti à l'extrémité du flexible externe 24.

Un canal E pratiqué dans le corps 1 établit une communication constante entre la chambre C d'arrivée du fluide hydraulique sous pression et la chambre A délimitée par les pistons 8 et 10.

La chambre B circonscrite par le guide 11 et le piston 8, peut être mise en relation, par le positionnement adéquat du tiroir, avec la chambre D communiquant avec le flexible de retour, au moyen d'un passage comprenant:

— un ou plusieurs orifices et, par exemple, deux orifices radiaux F ménagés dans la tige 7, en avant du piston 8;

— un ou plusieurs trous et, par exemple, deux trous radiaux G ménagés dans le fond d'une gorge annulaire G1 que présente le tiroir distributeur 12;

— un conduit longitudinal H constitué par un alésage de la partie postérieure dudit tiroir et dans lequel débouchent lesdits trous G;

— l'alésage I de l'ensemble: tige-entretoise 9—piston 10 dans lequel débouche ledit conduit H;

— la chambre J délimitée par la face arrière du piston 10;

— un canal K percé dans la partie postérieure du corps 1.

D'autre part, une communication peut être établie entre les chambres A et B, par le positionnement approprié du tiroir, au moyen d'un passage comprenant:

— un ou plusieurs orifices et, par exemple, deux orifices radiaux L ménagés dans le tige-entretoise 9, en arrière du piston 8;

— une gorge annulaire M que présente le tiroir de distribution 12, en arrière et à faible distance de la gorge G1;

— un ou plusieurs canaux et, par exemple, deux canaux N percés dans le piston 8, de manière diamétralement opposée et débouchant, d'une part, à l'avant dudit piston, dans la chambre B et, d'autre part, dans l'alésage de ce dernier.

Un ou plusieurs perçages transversaux 25 ménagé dans le fond d'une gorge annulaire dont est pourvu le tiroir 12, en avant de la gorge G1, et débouchant à proximité du fond de l'alésage H permettent un drainage efficace, vers le retour, de l'huile qui pourrait suinter de la chambre B et s'échapper en direction de l'avant de l'appareil. Pour améliorer l'étanchéité, un joint 26 est inséré dans une gorge annulaire que présente ledit tiroir dans sa portion antérieure, en avant du ou des perçages 25.

Le fonctionnement du sécateur qui vient d'être décrit est le suivant:

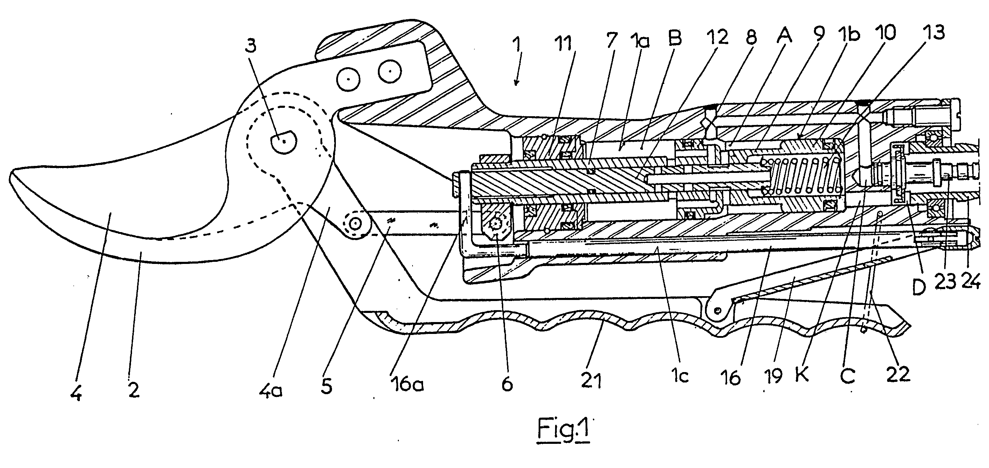

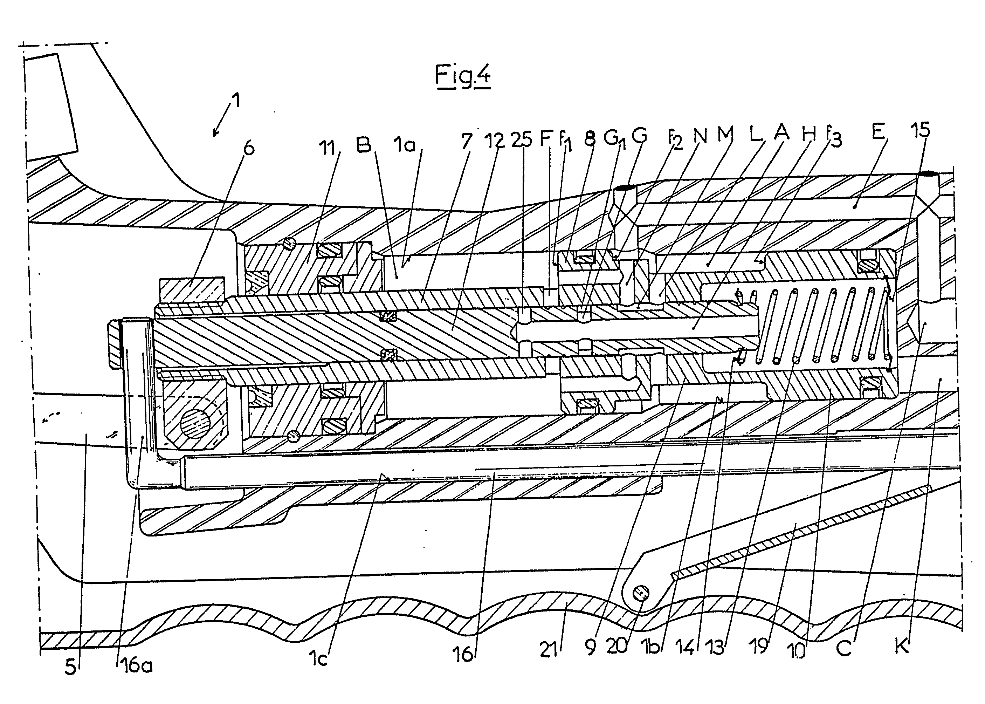

En position de fermeture des lames (figures 1 et 4), les pistons 8 et 10 sont calés en fin de course de recul et l'huile sous pression remplit les chambres A et B communiquant par le passage L—M—N, tandis que les orifices d'échappement F sont obturés par le tiroir 12.

Lorsqu'on relâche la gâchette 21, le ressort 13 pousse le tiroir 12 vers l'avant. L'avance de ce dernier provoque d'abord la fermeture des orifices L, puis la mise en relation des orifices d'échappement F avec les trous diamétraux G, de sorte que l'huile contenue dans la chambre B peut être acheminée jusqu'au flexible de retour par le passage F—G—H—I—J—K—D. L'absence de pression dans la chambre B permet l'avance des pistons 8 et 10 sous l'effet de la pression présente dans la chambre A, compte tenu du fait que la surface de travail f2 du piston 8 est plus importante que la surface de travail f3 du piston 10. Lorsque le piston 8 coulissant sur le tiroir vient obturer la gorge d'entrée G1 des trous G, il s'arrête car l'huile contenue dans la chambre B ne peut plus s'échapper.

Le tiroir avance de nouveau sous la poussée du ressort, remettant en communication les orifices F et les trous G, ce qui entraîne une nouvelle avance du piston, et ainsi de suite jusqu'à complète ouverture des lames si aucune action rétentrice n'est exercée sur la gâchette 21.

Un comprend donc que le relâchement de cette dernière se traduit, tout au long de sa course de pivotement, par de légères avances du tiroir 12 par rapport à l'ensemble tige 7—piston 8—tige-entretoise 9—piston 10, instantanément suivies de faibles avances dudit ensemble, de sorte que l'ouverture des lames est complètement asservie à ladite gâchette. Les mouvements répétés étant de l'ordre de quelques dizièmes de millimètres, ils s'accomplissent dans un temps très court, de sorte que l'ouverture des lames s'effectue pratiquement de manière progressive et continue, sans-à-coups.

On conçoit qu'il est aussi possible d'immobiliser la lame mobile dans une position intermédiaire quelconque entre la fermeture et l'ouverture maximum. Il suffit, pour cela, d'arrêter le pivotement de la gâchette, de manière que le piston 8 vienne obturer la gorge d'entrée G1 des trous G, le tiroir se trouvant immobilisé par le maintien de ladite gâchette et ledit piston ne pouvant avancer par suite de l'absence de communication entre les orifices d'échappement F et les trous G.

La fermeture des lames produisant l'action de coupe s'opère de manière analogue.

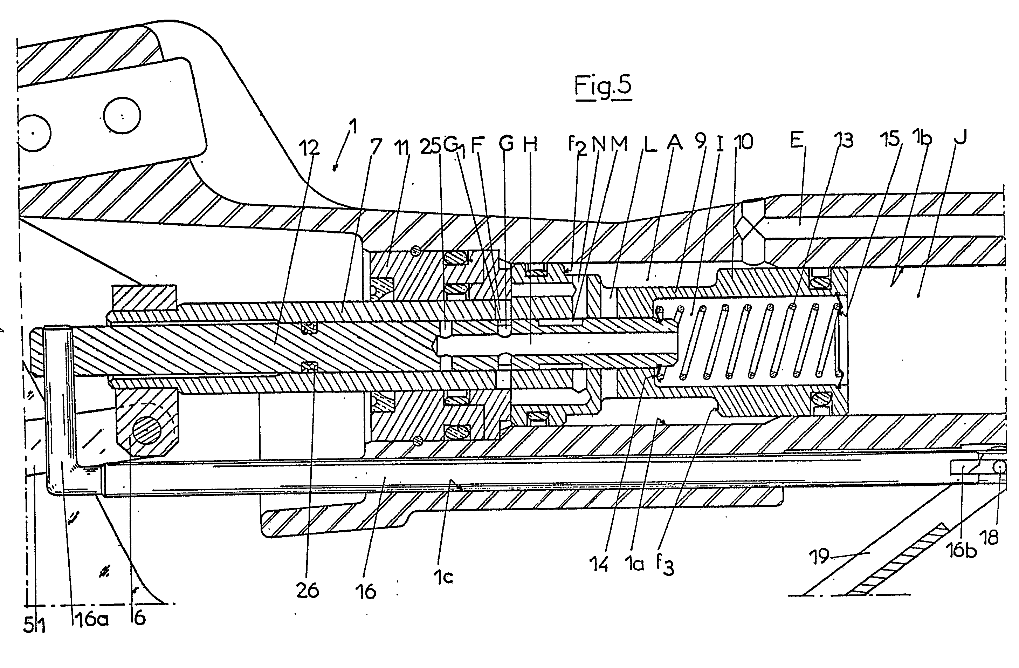

En position de complète ouverture des lames (figures 2 et 5), les pistons 8 et 10 sont calés en fin de course avant, la chambre B communique avec le retour par le passage F—G—H—I—J—K—D, tandis que le tiroir obture les orifices L du passage L—M—N de communication entre ladite chambre et la chambre A sous pression qui est ainsi fermé.

Lorsqu'on appui sur la gâchette 21, on provoque le recul du tiroir 12 par l'intermédiaire de la biellette 19 et de la tige de manoeuvre 16. Le tiroir coulisse dans l'ensemble 7—8—9 et, dans un premier temps, il ferme les orifices d'échappement F, de sorte que la chambre B ne se trouve plus en relation avec le retour. En poursuivant sa course, le tiroir ouvre les orifices L en mettant ces derniers en relation avec la gorge M, ce qui établit une communication entre les chambres A et B par le passage L—M—N.

La mise sous pression de la chambre B entraîne le recul de l'ensemble 7—8—9—10, compte tenu du fait que la surface f1 du piston 8 est plus importante que sa surface opposée f2, cette différence de section se trouvant augmentée par la surface f3 du piston 10. En reculant, l'ensemble 7—8—9—10 qui coulisse sur le tiroir, met fin à la communication entre les orifices L et la gorge annulaire M, de sorte que la chambre B n'étant plus sous pression, ledit ensemble s'arrête. La poursuite du mouvement de fermeture de la gâchette rétablit la communication entre lesdits orifices et ladite gorge, ce qui entraîne un nouveau recul de l'ensemble 7—8—9—10, et ainsi de suite jusqu'à fermeture complète des lames si on ne cesse d'appuyer sur ladite gâchette jusqu'au terme de sa course de fermeture.

On conçoit, par conséquent, que le pivotement de la gâchette 21 se traduit, tout au long de sa course de fermeture, par de légers mouvements de recul du tiroir 12 par rapport à l'ensemble tige 7—piston 8—tige-entretoise 9—piston 10, instantanément suivis de faibles mouvements de recul dudit ensemble, de sorte que la fermeture des lames est totalement asservie à ladite gâchette.

Comme indiqué précédemment, la fermeture des lames s'opère sans à-coups compte tenu de la faible amplitude des mouvements alternés et répétés du tiroir 12 et de l'ensemble 7—8—9—10 et du temps très court dans lequel ils s'accomplissent.

On comprend qu'il est également possible d'immobiliser la lame mobile dans une position intermédiaire quelconque entre l'ouverture maximum et la fermeture. Il suffit, en effet, pour cela, de ne plus exercer de pression sur la gâchette, de façon que le tiroir 12 étant maintenu dans un état stationnaire, le recul de l'ensemble 7—8—9—10 s'arrête dès que cesse la communication entre les orifices L et la gorge annulaire M, c'est-à-dire entre les chambres A et B.

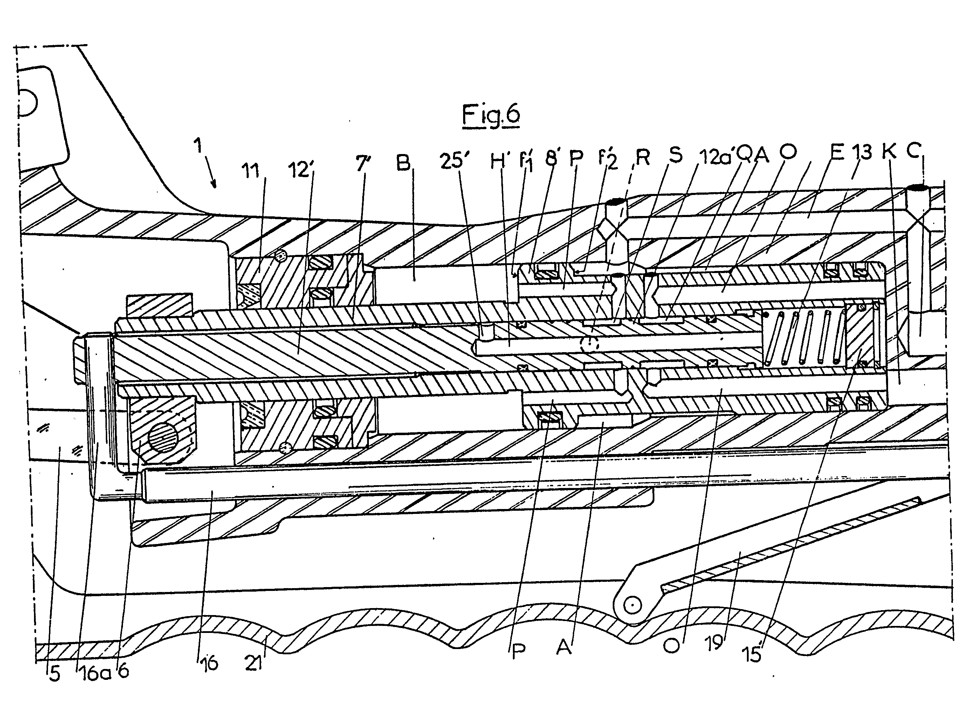

La variante d'exécution illustrée aux figures 6 à 8, diffère de celle qui vient d'être décrite principalement par le fait que le retour de l'huile ne s'effectue pas par l'alésage H' du tiroir 12', mais à travers des canaux d'échappement O ménagés dans la partie postérieure de la tige-entretoise 9' et dans le piston secondaire 10', lesdits canaux d'échappement débouchant, d'une part, dans l'alésage de ladite tige-entretoise et, d'autre part, à l'arrière dudit piston secondaire. Suivant ce mode de réalisation, la chambre B délimitée par le guide 11 et le piston 8', peut être mise en relation avec la chambre D communiquant avec le flexible de retour, au moyen d'un passage comprenant:

— un ou plusieurs canaux et, par exemple, deux canaux de communication P percés dans le piston 8' et dans la tige-entretoise 9', de manière diamétralement opposée, lesdits canaux débouchant à l'intérieur de ladite tige-entretoise, en arrière du plan dans lequel est compris la face f2' dudit piston;
— une gorge annulaire Q que présente le tiroir de distribution 12';

— les canaux O d'échappement dont l'entrée est disposée à faible distance et en arrière de celle des canaux P;
— la chambre J délimitée par la face arrière du piston 10';
— le canal K percé dans la partie postérieure du corps 1.

D'autre part, une communication peut être établie entre les chambres A et B, à travers un passage comprenant:

— un ou plusieurs perçages et, par exemple, deux perçages radiaux R ménagés dans la tige-entretoise 9', en arrière du piston 8', et en avant de l'entrée des canaux de communication (P);
— une gorge annulaire S que comporte le tiroir 12' en avant de la gorge Q et à faible distance de cette dernière;
— les canaux P s'ouvrant en arrière et à faible distance des perçages R.

L'épaulement circulaire 12a' séparant les gorges Q et S peut venir obturer les canaux P de manière à ce qu'il n'y ait pas de communication:

— d'une part, entre les chambres A et B, ni,
— d'autre part, entre la chambre B et le retour.

L'épaisseur de l'épaulement 12a' du tiroir 12' est approximativement égale:

— d'une part, à la distance séparant les orifices des perçages R et des canaux P débouchant dans l'alésage de l'ensemble 7'—8'—9'—10';
— d'autre part, à la distance séparant les orifices des canaux P et O débouchant dans ledit alésage.

D'autre part, selon ce mode d'exécution, l'extrémité arrière du ressort 13 n'est pas calée contre un anneau, mais contre un bouchon 15' vissé dans la partie postérieure du piston 10' et obturant l'alésage I dans lequel est installé ledit ressort.

Le fonctionnement du sécateur pourvu de cette variante d'exécution du dispositif hydraulique d'actionnement est sensiblement le même que celui de la réalisation initialement décrite.

En position de fermeture des lames (figure 6), les pistons 8' et 10' sont calés en fin de course de recul et l'huile sous pression remplit les chambres A et B communiquant par le passage R—S—P, alors que l'épaulement 12a' s'oppose à la circulation de l'huile en direction des canaux d'échappement O.

Lorsqu'on relâche la gâchette 21, le ressort 13 pousse le tiroir 12' vers l'avant, ce qui entraîne dans un premier temps, la fermeture des canaux P, par l'épaulement 12a', puis, dans un deuxième temps, leur réouverture et leur mise en relation avec la gorge Q, de sorte que l'huile contenue dans la chambre B peut être acheminée jusqu'au flexible de retour, par le passage P—Q—O—J—K—D. L'absence de pression dans la chambre B permet l'avance de l'ensemble: tige 7'—piston 8'—tige-entretoise 9'—piston 10', sous l'effet de la pression présente dans la chambre A, compte tenu du fait que, comme indiqué précédemment, la surface de travail f2' du piston 8' est plus importante que la surface de travail f3' du piston 10'. Lorsque, par suite du coulissement de l'ensemble 7'—8'—9'—10' sur le tiroir, l'entrée des canaux P se trouve obturée par l'épaulement 12a', ledit ensemble s'arrête car l'huile contenue dans la chambre B ne peut être évacuée vers le retour. Le tiroir avance de nouveau sous la poussée du ressort, remettant en communication les canaux P et la gorge Q, ce qui permet une nouvelle avance de l'ensemble 7'—8'—9'—10', et ainsi de suite jusqu'à complète ouverture des lames si aucune action de retenue ne contrarie l'ouverture de la gâchette 21.

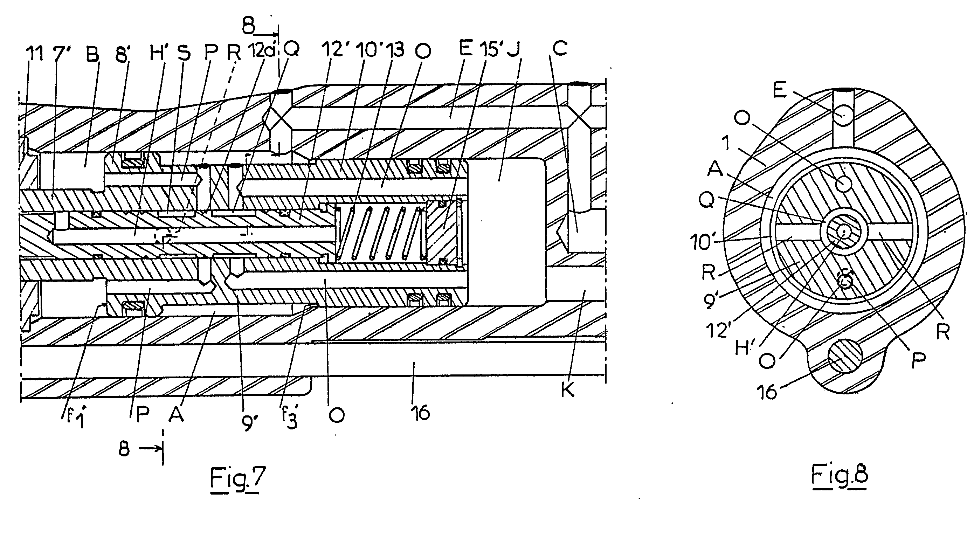

L'arrêt de la lame mobile dans une position intermédiaire quelconque entre la fermeture et l'ouverture (figure 7) s'obtient en retenant la gâchette de façon à immobiliser le tiroir 12'. Dans ce cas, l'ensemble 7'—8'—9'—10' s'arrête dès que l'entrée des canaux P se trouve obturée par l'épaulement 12a' du tiroir maintenu en état stationnaire, la chambre B n'étant plus sous pression, mais l'huile renfermée dans cette chambre ne pouvant s'échapper vers le retour empêche tout mouvement vers l'avant dudit ensemble.

La fermeture des lames s'opère de façon analogue.

En position de complète ouverture des lames, les pistons 8' et 10' sont calés en fin de course avant, la chambre B communique avec le retour par le passage P—Q—O—J—K—D, tandis que l'épaulement 12a' du tiroir 12' placé entre les perçages R et les canaux P interdit toute relation entre ladite chambre et la chambre A sous pression.

Lorsqu'on appui sur la gâchette 21, on provoque le recul du tiroir 12' qui coulisse dans l'ensemble 7'—8'—9'—10'.

Dans un premier temps, l'épaulement 12a' ferme la communication entre les canaux P et O, de sorte que la chambre B ne se trouve plus en relation avec le retour. Dans un deuxième temps, l'épaulement 12a' ouvre les canaux P en les mettant en relation avec la gorge S, ce qui établit une communication entre les chambres A et B par le passage R—S—P.

La mise sous pression de la chambre B entraîne le recul de l'ensemble 7'—8'—9'—10' qui coulisse sur le tiroir 12' compte tenu que la surface f1' du piston 8' est plus importante que sa surface opposée f2', cette différence de section se trouvant augmentée par la surface de travail f3' du piston 10'.

Ce recul cesse dès que l'entrée des canaux P se trouve obturée par l'épaulement 12a'.

La poursuite du mouvement de fermeture de la gâchette rétablit la communication entre les perçages R et les canaux P, par l'intermédiaire de la gorge S, ce qui occasionne un nouveau recul de l'ensemble 7'—8'—9'—10', et ainsi de suite jusqu'à fermeture complète des lames si on maintient une pression sur ladite gâchette jusqu'au terme de son mouvement de fermeture.

L'immobilisation de la lame mobile dans une position intermédiaire quelconque entre l'ouverture maximum et la fermeture s'obtient en interrompant le pivotement de la gâchette afin d'immobiliser le tiroir 12'. Dans ce cas, et comme indiqué ci-dessus, l'ensemble 7'—8'—9'—10' s'arrête dès que l'entrée des canaux P se trouve obturée par l'épaulement 12a' du tiroir maintenu en état stationnaire (figure 7).

On comprend donc que, suivant ce mode d'exécution, la position des lames est également totalement asservie à celle de la gâchette ou levier de manoeuvre 21.

Selon cette réalisation, l'alésage H' ménagé dans la partie postérieure du tiroir et dans le fond duquel débouche au moins un perçage transversal 25', sert uniquement au drainage de l'huile.

## Revendications

1. Sécateur hydraulique à asservissement en position, notamment pour travaux de taille ou de récolte en arboriculture, viticulture et horticulture, comportant un corps (1) évidé, à l'avant duquel sont installées deux lames (2—4) dont au moins une lame pivotante (4) actionnée par un dispositif hydraulique comprenant: d'une part, un piston d'entraînement (8) dont la tige (7) est assujettie à ladite lame pivotante, logé avec une aptitude de coulissement étanche dans l'évidement dudit corps et comportant deux faces opposées (f1—f2) de surfaces inégales et délimitant deux chambres de pression (A—B) dont une première chambre (A) délimitée par la face (f2) de plus petite surface et se trouvant en relation constante avec l'arrivée (C) de fluide hydraulique sous pression, et une deuxième chambre (B) délimitée par la face (f1) de plus grande surface; et, d'autre part, un tiroir distributeur (12), de préférence monobloc, et des moyens de distribution commandant les mouvements du piston, caractérisé en ce que ledit tiroir distributeur (12) est logé avec une latitude de coulissement axial dans l'ensemble piston—tige de piston (8—7) et relié cinématiquement à la gâchette (21) ou levier de commande manuel; et en ce que lesdits moyens de distribution permettent, suivant les positions dudit tiroir,—soit de mettre la deuxième chambre (B) en relation avec le retour de fluide hydraulique (D) de manière à permettre l'avance du piston; soit de fermer cette deuxième chambre de façon à assurer l'immobilisation dudit piston; soit de mettre en communication ladite deuxième chambre (B) et la chambre (A) se trouvant en relation constante avec l'arrivée, de façon à entraîner le recul de ce dernier en sens contraire.

2. Sécateur hydraulique selon la revendication 1, caractérisé en ce que le tiroir distributeur (12) est relié à la gâchette (21) ou levier de manoeuvre au moyen d'une tringlerie comprenant: une tige de manoeuvre (16) montée de manière coulissante dans un perçage longitudinal (1c) ménagé dans le corps (1) et au moins une biellette (19) articulée, par ses extrémités opposées, d'une part, à la partie postérieure de ladite tige de manoeuvre et, d'autre part, sur la partie arrière de ladite gâchette.

3. Sécateur hydraulique selon la revendication 2, caractérisé en ce que l'axe (18) d'articulation de la biellette (19) sur la tige de manoeuvre (16), a une position réglable par rapport à ladite tige.

4. Sécateur hydraulique selon l'une quelconque des revendications 1 à 3, caractérisé en ce que la gâchette (21) ou levier de commande est articulée sur l'axe (3) d'articulation de la lame pivotante (4).

5. Sécateur hydraulique suivant l'une quelconque des revendications 1 à 4, caractérisé en ce que le tiroir distributeur (12) est soumis à l'action d'un ressort de compression (13) tendant à le repousser vers l'avant par rapport à l'ensemble piston-tige de piston (8—7).

6. Sécateur hydraulique selon l'une quelconque des revendications 1 à 5, caractérisé en ce que le piston (8) est rigidement solidaire d'un piston secondaire (10) par l'intermédiaire d'une tige-entretoise (9), la face de travail (f3) dudit piston secondaire délimitant la chambre (A) en relation constante avec l'arrivée (C) de fluide hydraulique sous pression, et ayant une surface plus réduite que celle (f2) du piston principal (8) qui lui fait face.

7. Sécateur hydraulique suivant les revendications 5 et 6, caractérisé en ce que le ressort (13) est logé dans l'alésage de l'ensemble tige-entretoise (9)—piston secondaire (10) et prend appui, par ses extrémités opposées, d'une part, contre le tiroir distributeur (12) ou contre un organe (14) solidaire dudit tiroir et, d'autre part, contre un organe d'arrêt (15 ou 15') solidaire de l'extrémité postérieure dudit ensemble.

8. Sécateur hydraulique suivant l'une quelconque des revendications 1 à 7, caractérisé en ce que les moyens de distribution comprennent:

— un passage permettant de mettre la chambre (B) délimitée par la face avant (f1) du piston (8) en communication avec le retour (D) et comprenant: au moins un orifice radial (F) ménagé dans la tige de piston (7), en avant dudit piston; au moins un trou radial (G) ménagé dans le fond d'une gorge annulaire (G1) que présente le tiroir de distribution (12); un conduit longitudinal (M) exécuté dans la partie postérieure dudit tiroir et dans lequel débouche(nt) le ou lesdits trous; l'alésage (I) de l'ensemble tige-entretoise (9)—piston secondaire (10) dans lequel débouche ledit conduit; la chambre (J) délimitée par la face arrière dudit piston secondaire; un canal (K) percé dans la partie postérieure du corps (1);

— un passage permettant de mettre en communication les chambres (A—B) délimitées par le piston (8) et comprenant: au moins un orifice radial (L) ménagé dans la tige-entretoise (9) en arrière du piston (8); une gorge annulaire (M) que présente le tiroir de distribution (12) en arrière et à faible distance de la gorge (G1) dans laquelle débouche(nt) le ou les trous (G); au moins un canal (N) percé dans le piston (8) et débouchant, d'une part, à l'avant dudit piston et, d'autre part, dans l'alésage de ce dernier.

9. Sécateur hydraulique suivant l'une quelconque des revendications 1 à 7, caractérisé en ce que les moyens de distribution comprennent:

— un passage permettant de mettre la chambre (B) délimitée par la face avant du piston (8') en communication avec le retour (D) est comprenant; au moins un canal de communication (P) percé dans ledit piston et dans la tige-entretoise (9'), ce ou ces canaux débouchant, d'une part, à l'avant du piston (8') et, d'autre part, dans l'alésage de ladite tige-entretoise; une première gorge annulaire (Q) que présente le tiroir de distribution (12'); au moins un canal d'échappement (O) ménagé dans la partie postérieure de la tige-entretoise (9') et dans le piston secondaire (10'), ce ou ces canaux débouchant, d'une part, dans l'alésage de ladite tige-entretoise, à faible distance et en arrière de l'entrée du ou des canaux (P), et, d'autre part, en arrière dudit piston secondaire; la chambre (J) délimitée par la face arrière de ce dernier; un canal (K) percé dans la partie postérieure du corps (1);

— un passage permettant de mettre en communication les chambres (A—B) délimitées par le piston principal (8') et comprenant: au moins un perçage radial (R) ménagé dans la tige-entretoise (9'), en arrière du piston principal (8') et en avant de l'entrée du ou des canaux de communication (P); une seconde gorge annulaire (S) que comporte le tiroir (12'), en avant de ladite première gorge (Q) et à faible distance de cette dernière; le ou les canaux de communication (P);

— un épaulement circulaire (12a') du tiroir (12') séparant lesdites première (Q) et deuxième (S) gorges et susceptible d'obturer les canaux de communication (P) de manière qu'il n'y ait pas de relation: d'une part, entre les chambres (A—B) délimitées par le piston principal (8'); d'autre part, entre la chambre (B) délimitée par la face avant dudit piston et le retour.

10. Sécateur hydraulique suivant l'une quelconque des revendications 1 à 9, caractérisé en ce que le tiroir de distribution (12—12') comporte, dans sa partie postérieure, un alésage axial (H—H') à proximité du fond duquel débouche au moins un orifice radial (25—25'), de manière à permettre un drainage de l'huile qui pourrait suinter autour dudit tiroir.

**Patentansprüche**

1. Baumschere mit linearer, hydraulischer Unterstützung, vor allem für Schnitt- oder Erntearbeiten im Obst-, Wein- u. Gartenbau, bestehend aus einem Gehäuse (1) mit Aussparung, an dessen Vorderteil zwei Schneiden (2—4) angebracht sind, wovon mindestens eine (4) schwenkbar ist u. von einer hydraulischen Vorrichtung betätigt wird, bestehend aus: einerseits, einem Antriebskolben (8), dessen Kolbenschaft (7) mit besagter, schwenkbarer Schneide verbunden ist, u. der mit der Möglichkeit, in der Aussparung des besagten Gehäuses zu gleiten, sitzt, u. zwei gegenüberliegende Flächen (f1—f2) mit ungleich großen Oberflächen hat, u. die zwei Druckkammern abgrenzen (A—B), wovon eine erste Kammer (A) durch die Fläche (f2) mit kleinerer Oberfläche begrenzt wird u. sich in ständiger Verbindung mit der Zufuhr (C) der unter Druck stehenden Hydraulikflüssigkeit befindet, u. einer zweiten Kammer (B), die von der Fläche (f1) mit größerer Oberfläche begrenzt wird, u. andererseits aus einem Steuerschieber (12), vorzugsweise aus einem Stück, u. Verteilereinrichtungen, welche die Kolbenbewegungen regeln, dadurch gekennzeichnet, daß der besagte Steuerschieber (12) mit axialem Spielraum in der Einheit Kolben—Kolbenschaft (8—7) sitzt u. kinematisch mit dem Drücker (21) oder Bedienungshebel verbunden ist; u. dadurch, daß die besagten Verteilereinrichtungen je nach Stellung des besagten Schiebers,—entweder die zweite Kammer (B) in Verbindung mit dem Rückfluß der Hydraulikflüssigkeit (D) setzen, so daß der Kolbenvorschub ermöglicht wird; oder die zweite Kammer schließen, um den Stillstand des Kolbens zu gewährleisten; oder die zweite Kammer (B) u. die Kammer (A) in Verbindung setzen, die sich in ständigem Kontakt mit der Zufuhr befinden, so daß der Rücklauf des letzteren in die umgekehrte Richtung bewirkt wird.

2. Baumschere mit hydraulischer Unterstützung gemäß Anspruch 1, dadurch gekennzeichnet, daß der Steuerschieber (12) mit dem Drücker (21) oder Bedienungshebel über ein Gestänge verbunden ist, u. aus folgendem besteht: einer Schaltstange (16), die gleitend in einer Längsbohrung (1c) montiert ist, welche in dem besagten Gehäuse (1) ausgespart ist, u. mindestens einem Schwingarm (19), der an seinen gegenüberliegenden Enden einerseits an dem rückwärtigen Teil der besagten Schaltstange (16) u. andererseits an dem hinteren Teil des besagten Drückers gelenkig befestigt ist.

3. Baumschere mit hydraulischer Unterstützung gemäß Anspruch 2, dadurch gekennzeichnet, daß die Achse (18) zur Schwenkbarkeit des Schwingarms (19) an der Schaltstange (16) im Verhältnis zu besagter Stange verstellbar ist.

4. Baumschere mit hydraulischer Unterstützung gemäß einem der Ansprüche 1—3, dadurch gekennzeichnet, daß der Drücker (21) oder Bedienungshebel auf der Achse (3) beweglich ist, zur Schwenkbarkeit der beweglichen Schneide (4).

5. Baumschere mit hydraulischer Unterstützung gemäß einem der Ansprüche 1—4, dadurch gekennzeichnet, daß der Steuerschiebar (12) der Einwirkung einer Druckfeder (13) unterliegt, welche die Tendenz hat, ihn nach vorne, bezogen auf die Einheit Kolben—Kolbenschaft (8—7) zu stoßen.

6. Baumschere mit hydraulischer Unterstützung gemäß einem der Ansprüche 1—5, dadurch gekennzeichnet, daß der Kolben (8) mit einem Nebenkolben (10) fest verbunden ist über ein Schaft-Zwischenstück (9), wobei die Arbeitsseite (f3) des besagten Nebenkolbens die Kammer (A) abgrenzt, die in ständiger Verbindung mit der Zufuhr (C) der unter Druck stehenden Hydraulikflüssigkeit steht u. eine kleinere Oberfläche aufweist, als die (f2) des Hauptkolbens, der ihm gegenüber liegt.

7. Baumschere mit hydraulischer Unterstützung gemäß den Ansrüchen 5 u. 6, dadurch gekennzeichnet, daß die Feder (13) in der Bohrung der Einheit Schaft-Zwischenstück (9)—Nebenkolben (10) liegt u. einerseits mit ihren gegenüberliegenden Enden gegen den Steuerschieber (12) oder ein Organ (14) drückt, das an besagtem Schieber sitzt, u. andererseits gegen ein Absperrorgan (15 oder 15'), das an dem hinteren Ende der besagten Einheit sitzt.

8. Baumschere mit hydraulischer Unterstützung gemäß einem der Ansprüche 1—7, dadurch gekennzeichnet, daß die Verteilereinrichtungen aus folgendem bestehen:

— einem Durchlaß, der ermöglicht, daß die Kammer (B), die durch die Vorderseite (f1) des Kolbens (8) begrenzt wird, der mit dem Rücklauf (D) in Verbindung ist, u. aus folgendem besteht: mindestens einer Radialöffnung (F), die in dem Kolbenschaft an der Vorderseite des besagten Kolbens ausgespart ist; mindestens einem Radialloch (G), das an der Rückseite einer Ringnut (G1) sitzt, welche der Steuerschieber (12) aufweist; einer Längsbohrung (H), die in dem rückwärtigen Teil des besagten

**0 028 997**

Schiebers ausgeführt ist u. in der die Radiallöcher enden; der Bohrung (I) der Einheit Schaft-Zwischenstück (9)—Nebenkolben (10), in welche die besagte Längsbohrung (H) mündet; der Kammer (J), welche durch die Rückseite des besagten Nebenkolbens begrenzt wird; einem Kanal (K), der in den rückwärtigen Teil des Gehäuses (1) gebohrt ist;

— einem Durchlaß, der eine Verbindung der Kammern (A—B) ermöglicht, die begrenzt werden durch den Kolben (8), u. aus folgendem besteht: mindestens einer Radialöffnung (L), die in dem Schaft-Zwischenstück (9) hinter dem Kolben (8) eingebracht ist; einer Ringnut (M), die der Steuerschieber aufweist, hinter u. in geringer Entfernung der Ringnut (G1), in welche das Radialloch oder die Radiallöcher (G) münden; mindestens einem Kanal (N), der in den Kolben (8) gebohrt ist u. einerseits im Vorderteil des besagten Kolbens u. andererseits in der Bohrung der letzteren endet.

9. Baumschere mit hydraulischer Unterstützung gemäß einem der Ansprüche 1—7, dadurch gekennzeichnet, daß die Verteilereinrichtungen folgendes umfassen:

— einen Durchlaß, der ermöglicht, daß die Kammer (B), begrenzt durch die Vorderseite des Kolbens (8') mit dem Rücklauf (D) in Verbindung ist u. aus folgendem besteht: mindestens einem Verbindungskanal (P), welcher in den besagten Kolben u. das Schaft-Zwischenstück (9') gebohrt ist, wobei der oder diese Kanäle einerseits an dem Vorderteil des Kolbens (8'), u. andererseits in der Bohrung des besagten Schaft-Zwischenstücks enden; einer ersten Ringnut (Q), die der Steuerschieber (12') aufweist; mindestens einem Abzugskanal (O), welcher im rückwärtigen Teil des Schaft-Zwischenstücks (9') u. in dem Nebenkolben (10') ausgespart ist; wobei dieser oder diese Kanäle einerseits in der Bohrung des besagten Schaft-Zwischenstücks, in geringer Entfernung u. hinter dem Zulauf des oder der Kanäle (P) u. andererseits hinter dem besagten Nebenkolben enden; die durch die Rückseite des letzteren abgegrenzte Kammer (J); einem Kanal (K), der in den rückwärtigen Teil des Gehäuses (1) gebohrt ist;

— einen Durchlaß, der ermöglicht, die Kammern (A—B) zu verbinden, die begrenzt sind durch den Hauptkolben (8'), bestehend aus: mindestens einer Radialbohrung (R), die in das Schaft-Zwischenstück (9') hinter dem Hauptkolben (8') eingebracht ist u. vor dem Zulauf des oder der Verbindungskanäle (P); eine zweite Ringnut (S), die der Steuerschieber (12') aufweist, vor der besagten ersten Ringnut (Q) u. in geringer Entfernung dieser letzteren; den oder die Verbindungskanäle (P);

— einen runden Absatz (12a) des Steuerschiebers (12'), der die besagte erste (Q) u. zweite (S) Ringnut trennt u. die Verbindungskanäle (P) verschließen kann, so daß keine Verbindung besteht: einerseits zwischen den Kammern (A—B), die durch den Hauptkolben (8') begrenzt werden; andererseits zwischen der Kammer (B), die durch die Vorderseite des besagten Kolbens u. den Rückhub begrenzt wird.

10. Baumschere mit hydraulischer Unterstützung gemäß einem der Ansprüche 1—9, dadurch gekennzeichnet, daß der Steuerschieber (12—12') in seinem rückwärtigen Teil eine Axialbohrung (H—H') besitzt, an deren Rückseite mindestens ein Radialmundstück (25—25') mündet, um einen Abfluß des Öls zu ermöglichen, das um den besagten Steuerschieber aussickern könnte.

**Claims**

1. Hydraulic pruning shears with positioning control, especially for work of pruning or crop gathering in arboriculture, viticulture and horticulture, comprising a hollow body (1), at the front of which are installed two blades (2—4) of which at least one pivoting blade (4) is actuated by a hydraulic device comprising: on the one hand, a driving piston (8) of which the rod (7) is coupled to the said pivoting blade, housed with a capability of sliding in fluid tight manner in the hollow of the said body and comprising two opposed faces (f1—f2) of unequal surfaces and bounding two pressure chambers (A—B) of which a first chamber (A) is bounded by the face (f2) of smaller surface and is in constant relationship with the inlet (C) of hydraulic fluid under pressure, and a second chamber (B) bounded by the face (f1) of greater surface; and, on the other hand, a distributor slide valve (12), preferably of monobloc construction, and distribution means controlling the movements of the piston, characterised in that the said distributor slide valve (12) is lodged with a latitude of axial sliding in the assembly of piston-rod of the piston (8—7) and kinematically coupled to the trigger (21) or manual control lever; and in that the said distribution means permit, according to the positions of the said slide valve,—either to place the second chamber (B) in relation with the return (D) for hydraulic fluid in such a manner as to permit the advance of the piston; or to close this second chamber in such a manner as to ensure the immobilisation of the said piston; or again to place in communication the said second chamber (B) and the chamber (A) which is in constant relation with the inlet, in such a manner as to cause the return of this latter in the opposite direction.

2. Hydraulic pruning shears according to claim 1, characterised in that the distributor slide valve (12) is coupled to the trigger (21) or manipulating lever by means of a rod assembly comprising: a manipulating rod (16) mounted in slidable manner in a longitudinal opening (1c) formed in the body (1) and at least one connecting rod (19) articulated, by its opposite ends, on the one hand, to the rear part of the said manipulating rod and, on the other hand, on the rear part of the said trigger.

3. Hydraulic pruning shears according to claim 2 characterised in that the axis (18) of pivoting of the rod (19) on the manipulating rod (16) has a position adjustable with respect to the said rod.

4. Hydraulic pruning shears according to any one of claims 1 to 3, characterised in that the trigger (21) or control lever is pivoted on the axis (3) of pivoting of the pivoting blade (4).

5. Hydraulic pruning shears according to any one of claims 1 to 4, characterised in that the distributor slide valve (12) is submitted to the action of a compression spring (13) tending to push it forwardly with respect to the piston-rod assembly of the piston (8—7).

6. Hydraulic pruning shears according to any one of claims 1 to 5, characterised in that the piston (8) is rigidly fast with a secondary piston (10) by means of a coupling rod (9), the working face (f3) of the said secondary piston bounding the chamber (A) in constant relationship with the inlet (C) of hydraulic fluid under pressure, and having a lesser surface than that (f2) of the principal piston (8) which faces it.

7. Hydraulic pruning shears according to claims 5 and 6, characterised in that the spring (13) is housed in the bore of the assembly of coupling rod (9)—secondary piston (10) and bears, by its opposite ends, on the one hand, against the distributor slide valve (12) or against the member (14) fast with the said slide valve and, on the other hand, against a stop member (15 or 15') fast with the rear end of the said assembly.

8. Hydraulic pruning shears according to any one of claims 1 to 7, characterised in that the distributing means comprise:

— a passage permitting to place the chamber (B) bounded by the forward face (f1) of the piston (8) in communication with the return (D) and comprising: at least one radial orifice (F) formed in the rod of piston (7), in front of the said piston; at least one radial hole (G) formed in the base of an annular throat (G1) of the distributor slide valve (12); a longitudinal conduit (H) formed in the rear part of the said slide valve and in which open the said hole or holes; the bore (I) of the assembly of coupling rod (9)—secondary piston (10) into which the said conduit opens; the chamber (J) bounded by the rear face of the said secondary piston; a channel (K) formed in the rear part of the body (1);

— a passage permitting the placing in communication of the chambers (A—B) bounded by the piston (8) and comprising: at least one radial orifice (L) formed in the coupling rod (9) to the rear of the piston (8); an annular throat (M) of the distributor slide (12) to the rear and at a small distance from the throat (G1) into which open the hole or holes (G); at least one channel (N) formed in the piston (8) and opening, on the one hand, in front of the said piston and, on the other hand, in the bore of this latter.

9. Hydraulic pruning shears according to any one of claims 1 to 7, characterised in that the distribution means comprise:—a passage permitting to place the chamber (B) bounded by the forward face of the piston (8') in communication with the return (D) and comprising: at least one communication channel (P) formed in the said piston and in the coupling rod (9'), the or each channel opening, on the one hand, at the front of the piston (8') and, on the other hand, in the bore of the said coupling rod, a first annular throat (Q) of the distributor slide valve (12'); at least one exhaust channel (O) formed in the rear part of the coupling rod (9') and in the secondary piston (10'), the or each channel opening, on the one hand, in the bore of the said coupling rod, at a small distance and to the rear of the inlet of the or each of the channels (P), and, on the other hand, at the rear of the said secondary piston; the chamber (J) bounded by the rear face of this latter; a channel (K) formed in the rear part of the body (1);

— a passage permitting to place in communication the chambers (A—B) bounded by the principal piston (8') and comprising: at least one radial opening (R) formed in the coupling rod (9'), at the rear of the principal piston (8') and in front of the inlet of the or each communication channel (P); a second annular throat (S) of the slide valve (12'), in front of the said first throat (Q) and at a small distance from this latter; the or each communication channel (P);

— a circular shoulder (12a') of the slide valve (12') separating the said first (Q) and second (S) throats and capable of closing the communication channels (P) in such a manner that there is no connection: on the one hand, between the chamber (A—B) bounded by the principal piston (8'); on the other hand, between the chamber (B) bounded by the forward face of the said piston and the return.

10. Hydraulic pruning shears according to any one of claims 1 to 9, characterised in that the distributor slide valve (12—12') comprises, in its rear part, an axial bore (H—H') in proximity to the base of which there opens at least one radial orifice (25—25'), in such a manner as to permit a draining of oil which might leak about the said slide valve.

Fig.1

0028 997

Fig.3

Fig 2

Fig.4

0028 997

Fig.5

0 028 997

Fig.6

0028 997

11 7' B 8' H' S P R 12a Q 12' 10' 13 O E 15' J C

8

f₁ P A 9' f₃ O 16

8

Fig.7

E O 1 A Q 10' R 9' 12' H' O 16 P R

Fig.8